# EUROPÄISCHE PATENTSCHRIFT

(11) **EP 2 818 952 B1**
(45) Veröffentlichungstag und Bekanntmachung des Hinweises auf die Patenterteilung: **26.06.2019**
(21) Anmeldenummer: 14002200.5
(22) Anmeldetag: 27.06.2014
(51) Int. Cl.: G05B 19/418, G06K 7/10, B61L 3/12, B61L 25/02, B61L 27/04

(54) **Steuerungssystem für einen schienengebundenen Fahrroboter und Verfahren zu dessen Betrieb**
Control system for a railbounded mobile robot and method for operating the same
Système de commande d'un robot mobile sur rails et son procédé de fonctionnement

(30) Priorität: 28.06.2013 DE 102013010787
(43) Veröffentlichungstag der Anmeldung: 31.12.2014
(73) Patentinhaber: SERVUS Intralogistik GmbH, 6850 Dornbirn (AT)
(72) Erfinder: Beer, Christian, 6858 Schwarzach (AT)
(74) Vertreter: Riebling, Peter

(56) Entgegenhaltungen:
- EP-A1- 0 618 523
- EP-A1- 2 527 274
- EP-A2- 1 703 351
- WO-A2-2012/141601
- CN-A- 102 890 510
- DE-A1-102011 109 532
- US-A1- 2005 159 854
- US-A1- 2011 118 869
- US-A1- 2011 254 667

## Beschreibung

Die Erfindung betrifft ein Steuerungssystem für einen schienengebundenen Fahrroboter und ein Verfahren zu dessen Betrieb nach dem Oberbegriff des Patentanspruches 1.

Mit einem in der EP 1 703 351 A2 beschriebenen Fahrsystem, welches unter der Bezeichnung "Manhattan-System" bekannt ist, wird ein Steuerungssystem für schienengebundene Fahrroboter in einem weitverzweigten Schienennetz beschrieben. Dieses Steuerungssystem besteht aus der Definition einer Vielzahl von Einbahnstraßen, Kreuzungen und Wegevorschriften, die eine Kollision von mehreren, in einem Schienensystem operierenden Transportrobotern verhindert. Die vorliegende Erfindung bezieht sich auf die in dieser Druckschrift enthaltenen Informationen, die demnach auch erfindungswesentlicher Gegenstand dieser Beschreibung sind.

Gleiches gilt für den Gegenstand der DE 198 42 752 B4, die ein mit dem erfindungsgemäßen Schienennetz vergleichbares Transfersystem beschreibt.

Der Begriff "Manhattan-System" war vom Straßensystem im Ortsteil Manhattan der Stadt New York abgeleitet, bei dem über ein striktes Straßen-Managementsystem Fahrregeln vorgeschrieben sind; zum Beispiel, dass die von Westen nach Osten gehenden Straßen nur in der einen Richtung befahren werden können, während die in der Gegenrichtung sich erstreckenden Straßen nur in der anderen Richtung befahren werden können.

Aufgrund dieses Bündels von Befahrvorschriften wurde ein kollisionsfreier Verkehr für eine Vielzahl von Schienenrobotern in einem Schienensystem gewährleistet.

Nachteil des bekannten Systems ist jedoch die Tatsache, dass nicht verschiedene Ebenen des Schienensystems definiert werden konnten. Es handelte sich also um ein flächiges System, welches nur in einer einzigen horizontalen Ebene funktionierte, und hierdurch ergaben sich Beschränkungen.

WO 2012/141601 A2 offenbart ein Verfahren und Steuerungssystem, welches geeignet ist zur Steuerung eines Fahrweges von Transportfahrzeugen in einem Wegenetz, wobei die Strecken des Wegenetzes durch Knoten und Kanten definiert sind.

US2011/0118869 A1 offenbart die Markierung von Abzweigungen von Fahrstrecken für ein Transportmittel mittels eines RFID-Tags.

CN 102890510 A offenbart ein RFID-basiertes intelligentes Navigationssystem für Transportfahrzeuge, wobei das Transportfahrzeug einen RFID-Reader aufweist, welcher RFID-Tags entlang der Strecke auslesen kann. Die Routenführung erfolgt durch ein zentrales Steuerungssystem.

DE 10 2011 109532 A1 offenbart eine Anlage und ein Verfahren zum betreiben dieser Anlage, wobei bei einem Fahrzeug ein RFID-Transponder zur Positionsbestimmung verwendet wird.

US 2011/254667 A1 offenbart die Verwendung eines Bandmaterials auf dem eine Vielzahl von RFID-Tags angeordnet ist. Dieses Bandmaterial kann entlang einer Strecke ausgelegt werden, wobei ein Fahrzeug dann diesem Band mit Hilfe der im Band vorhandenen RFID-Tags folgt.

US 2005/159854 A1 offenbart ein Transportsystem, bei dem RFID-Tags an Stationen für das Fahrzeug, welche das Fahrzeug anfahren soll, angeordnet sind.

Der Erfindung liegt deshalb die Aufgabe zugrunde, ein Steuerungssystem für ein weit verzweigtes Schienennetz für in mehreren Ebenen verkehrende Transportrobotern zu definieren.

Die Aufgabe wird durch ein Verfahren gemäß Anspruch 1 und einem Steuerungssystem gemäß Anspruch 6 gelöst.

Es soll besonders darauf abgehoben werden, dass eine schnelle Berechnung der Steuerungsbefehle stattfindet, ein geringer Rechenaufwand erforderlich ist und dass jeder Transportroboter selbsttätig über eine Vielzahl von Kreuzungspunkten und Ebenen im Vorweg bereits schon seinen beabsichtigten Fahrweg berechnen kann.

Beim Manhattan-System war die Berechnung über mehrere Strecken nur durch die Anwendung der Verkehrsregeln möglich, was unflexibel ist. Wurde nämlich die Verkehrsregel für einen bestimmten Schienenweg geändert, musste die gesamte Software geändert werden.

Beim vorliegenden System besteht der Vorteil, dass ein Transportroboter mit eingebautem Steuerungssystem über eine Vielzahl von Kreuzungs- und Verzweigungspunkten im Voraus bereits schon seine beabsichtigte Strecke berechnen kann, und hierbei ein virtuelles Bewertungssystem herangezogen wird.
Wesentliches Merkmal der Erfindung ist, dass das Schienensystem mithilfe von Knoten und Kanten im Sinne der Graphentheorie im Steuerungssystem des Transportroboters abgebildet wird. Dabei wird ein gerichteter Graph definiert. Ein vollständiges. weitverzweigtes Schienensystem mit ihren Assistenten, Arbeitsstationen und Lagerplätzen wird dann lediglich durch eine Knotenliste und eine zugehörende Kantenliste eindeutig beschrieben.

Damit besteht der Vorteil, dass jeder Transportroboter vorzeitig sein aktuelles Ziel berechnen kann, bevor er sich überhaupt in Marsch setzt und für den berechneten Weg ein virtuelles Bewertungssystem verwendet, das mit einer Kosten-Nutzen-Analyse vergleichbar ist.

Die verschiedenen vom Transportroboter zu befahrenden Strecken werden mit virtuellen Kosten belegt. Je weiter die vom Transportroboter zu befahrende Strecke von seinem augenblicklichen Aufenthaltsort entfernt ist und je verschiedener die zu überwindenden Ebenen sind, desto höher sind die Kosten, diesen entfernten Punkt zu erreichen.

In der Graphentheorie bezeichnet ein Graph eine Menge von Knoten (auch Ecken genannt) zusammen mit einer Menge von Kanten. Eine Kante ist hierbei ein Menge von genau zwei Knoten. Ist die Menge der Knoten endlich, spricht man von endlichen Graphen, ansonsten von unendlichen Graphen. Wenn die Kanten statt durch Mengen durch Paare von Knoten angegeben sind, spricht man von gerichteten Graphen. In diesem Falle unterscheidet man zwischen der Kante (a,b) - als Kante von Knoten a zu Knoten b - und der Kante (b,a) - als Kante von Knoten b zu Knoten a.
Knoten und Kanten können auch mit Farben (formal mit natürlichen Zahlen) oder Gewichten (d. h. rationalen oder reellen Zahlen) versehen werden. Man spricht dann von knoten- bzw. kantengefärbten oder -gewichteten Graphen.

Graphen können verschiedene Eigenschaften haben. So kann ein Graph zusammenhängend, bipartit, planar, eulersch oder hamiltonisch sein. Es kann nach der Existenz spezieller Teilgraphen gefragt werden oder bestimmte Parameter untersucht werden, wie zum Beispiel Knotenzahl, Kantenzahl, Minimalgrad, Maximalgrad, Taillenweite, Durchmesser, Knotenzusammenhangszahl, Kantenzusammenhangszahl, chromatische Zahl, Stabilitätszahl oder Cliquenzahl.

Die verschiedenen Eigenschaften können zueinander in Beziehung stehen. Die Beziehungen zu untersuchen ist eine Aufgabe der Graphentheorie. Beispielsweise ist die Knotenzusammenhangszahl nie größer als die Kantenzusammenhangszahl, welche wiederum nie größer als der Minimalgrad des betrachteten Graphen ist. In ebenen Graphen ist die Färbungszahl immer kleiner als 5. Diese Aussage ist auch als der Vier-Farben-Satz bekannt.

Einige der aufgezählten Grapheneigenschaften sind relativ schnell algorithmisch bestimmbar, etwa wenn der Aufwand höchstens mit dem Quadrat der Größe der Graphen wächst.

Bei der Anwendung der Graphentheorie auf die Merkmale der Erfindung gelten folgende Definitionen:
Fahrt: mehrere Kanten ergeben eine Fahrt
Knoten: Knoten können Lifte, Weichen, RFID-Tags oder auch eine Länge sein
Kanten: Kanten sind Verbindungen zwischen zwei Knoten
Platz: Ein Platz ist zum Beispiel ein Lagerplatz in einem Lager

Knoten sind also Stationen, an denen etwas zu tun ist. Normalerweise ist an solchen Positionen ein RFID-Tag angebracht (zum Beispiel die Anmeldung an einem Hublift, einer Ladestation und dergleichen). Es ist aber auch möglich, virtuelle Knoten (ohne RFID-Tag) zu setzen.

Die Knoten-IDs 1 und 2 sind für den Transportroboter selbst definiert, und mit den Knoten-IDs 1 und 2 kann er interne Bearbeitungen durchführen, wie zum Beispiel die Ansteuerung eines von ihm getragenen Hubliftes, einer Einzugsvorrichtung oder anderer Aggregate, die auf dem Transportroboter selbst angeordnet sind, und die zum Beispiel zum Aufnehmen oder Abladen der Ladung bestimmt sind.

Virtuelle Knoten sind Knoten ohne zugehörige RFID-Tags auf der Strecke.
A. Die Einsatzgebiete für virtuelle Knoten sind:
   a.) Einsparung realer (physikalischer) RFID-Tags: Aus Vereinfachungsgründen sind reale RFID-Tags nur einmal auf der Hubplattform eines Hubliftes angeordnet. Auf jeder Ebene ist dann ein virtueller Knoten mit einem virtuellen RFID-Tag angeordnet, um den Lageranfang eines Lagersystems zu kennzeichnen.
   b.) Nahe zusammen liegende Stationen:
      Funkgestützt arbeitende RFID-Tags brauchen einen bestimmten Abstand, um eindeutig eine Reihenfolge dicht hintereinander liegender Tags zu detektieren. Es ist möglich, nur einen RFID-Tag zu setzen und den zweiten Knoten als virtuellen Knoten einzufügen. Damit wird das Übersprechen von nahe beieinander liegenden RFID-Tags vermieden.
   c.) Sackgassen:
      Das Ende der Gasse am Ende einer Sackgasse in einem Lager wird mit einem virtuellen Knoten gekennzeichnet. Dadurch ist es möglich, ohne einen RFID-Tag zu verwenden, eine Kante an dem Lagerende eines Lagersystems zu definieren, und ebenfalls vom Lagerende an den Lageranfang eine bestimmte Definition zu setzen.
B. Informationen eines Knoten:
   a.) Eine eindeutige Knoten-ID (Größe 1, kleiner als 65535)
   b.) Knotentyp: Ein Knoten kann mehrere Typen gleichzeitig besitzen (zum Beispiel Lift, Anmeldung am Lift, Stopp am Lift und dergleichen)
   c.) RFID-Nummer des zugehörigen RFID-Tags (virtuelle Knoten haben die RFID-Nummer 0)
C. Edge/Kanten
   a.) Kanten bilden den Weg von einer Station zu einer anderen ab.
   b.) Eine Kante verbindet zwei Knoten und hat eine eindeutige Richtung von einem Knoten zu einem anderen.
C1. Kanten in einem Lager eines Lagersystems:
   Bei Kanten, die einen Weg in einem Lager abbilden, wird die Anzahl der Plätze auf der linken und der rechten Seite der Gasse (gesehen von der Hauptfahrrichtung des Transportroboters) gespeichert. Wichtig ist dabei, dass bei einer Sackgasse oder bei einer Gasse, die von zwei Richtungen angefahren werden kann, nur in eine der Kanten die Anzahl der Plätze gespeichert wird (vorzugsweise in der Kante mit der Fahrrichtung vorwärts).
C2. Länge der Kante:
   Das ist die Länge des Weges zwischen zwei Knoten (größer 0, kleiner als 65534 cm).
D. Kosten:
   Die Kosten eines virtuellen Bewertungssystems können zwischen 0-255 liegen, wobei 0 bedeutet, dass der Pfad deaktiviert ist.

Je länger der Pfad ist, desto höher sind die Kosten, die für die Befahrung dieses Pfades zu veranschlagen sind.

Ebenso werden Kosten für die Pfade entsprechend deren Layout in der Anlage verteilt.

Beispielsweise entstehen hohe Kosten, wenn von einer oberen oder unteren Ebene eines ankommenden Schienenweges auf eine andere Ebene im Lagersystem verzweigt werden soll. Die Kosten sind demnach auch mit der notwendigen Fahrzeit zwischen Start und Ziel, sowie den dazwischen zu überwindenden Ebenen korreliert.

Das Wechseln der Ebene wird also mit höheren Kosten belegt, als vergleichsweise ein direkter Durchfahrweg, der nicht mit einem Wechsel der Ebene verbunden ist.

Ein Kostenmanagement wird derzeit nur im Hublift und in der Ansteuerung zum Hublift verwendet. Hierauf ist die Erfindung jedoch nicht beschränkt. Die Erfindung kann Kosten für jede beliebige Kante verteilen und zuordnen, um die bestimmten Wege mit einer bestimmten Bewertung belegen zu können.

Statt dem Begriff "Kosten" können auch andere Bewertungsbegriffe verwendet werden, wie zum Beispiel "Punkte" oder andere virtuelle Größen, die in einem dezimalen System bewertbar sind.

Bei der vorliegenden Erfindung besteht der Vorteil, dass - von einem beliebigen Standort des Transportroboters ausgehend - der Transportroboter über eine NFC-Verbindung (alle RFID-Tags arbeiten erfindungsgemäß nur im NFC-Feld) seinen augenblicklichen Standort feststellt. Die Übertragung erfolgt mit passiven HF-RFID-Tags nach ISO 14443 oder ISO 15693)

Die NFC-Technik arbeitet in einem Frequenzbereich von 13,56 MHz und bietet eine Datenübertragungsrate von maximal 424 kBit/s bei einer Reichweite von nur zehn Zentimetern. Die Kommunikation zwischen NFC-fähigen Geräten kann sowohl aktiv-passiv als auch aktiv-aktiv sein (Peer-To-Peer) im Gegensatz zur herkömmlichen Kontaktlostechnik in diesem Frequenzbereich (nur aktiv-passiv). Daher stellt NFC eine Verbindung zur RFID-Welt dar.

Eine NFC-Verbindung erreicht eine Reichweite von ca. 10 bis 30 cm, sodass es erforderlich ist, dass sich ein Transportroboter zur Berechnung seines Weges erst einmal einem beliebigen, auf der Strecke befindlichen RFID-Tag im Nahfeldbereich nähert und dort die Kommunikation mit dem RFID-Tag aufnimmt.

Er erhält beim Datenaustausch mit dem RFID-Tag über das NFC-Protokoll die Information, an welcher Stelle er sich befindet.

Er sendet dann über ein funkgestütztes Protokoll, zum Beispiel nach dem ZigBee-Standard, ein Anwesenheitssignal an eine externe Steuerung und teilt dieser externen Steuerung mit, wo er sich gerade befindet, und fragt gleichzeitig, ob ein Auftrag für ihn vorliegt. ZigBee ist ein Industriestandard für Funknetze. PHY- und MAC-Layer basieren auf IEEE 802.15.4, der es ermöglicht, Haushaltsgeräte, Sensoren, uvm. auf Kurzstrecken (10 bis 100 Meter) zu verbinden.

Über diese funkgestützte Kommunikationsverbindung erhält der Transportroboter einen Transport- und einen Fahrauftrag.

Mit dem Transport- und dem Fahrauftrag hat er auch das Ziel erhalten, zu dem er sich hinbegeben soll.

Nun wird im Computer des Transportroboters berechnet, welches der günstigste Weg für ihn zum Erreichen des Zielpunktes ist. Es werden die Kanten in den Computer des Transportroboters eingelesen, und danach findet eine Bewertung der Strecke mit allen Kanten statt, und zwar anhand der aufsummierten Kosten.

Demnach hat der Transportroboter eine Mehrzahl von Möglichkeiten, sein angestrebtes Ziel zu erreichen.

Vorteilhaft ist, wenn der Transportroboter nun die Strecke auswählt, die mit den geringsten Kosten belegt ist. Dies bedeutet gleichzeitig, dass er möglichst den Wechsel von Ebenen vermeidet, er kann ferner erkennen, ob irgendwelche Teilstücke auf seiner Strecke gesperrt sind und er einen Umweg nehmen muss. Dementsprechend werden die (wegbezogenen) Kosten kalkulieren.

Es handelt sich um ein vektorgestütztes Navigationssystem, bei dem jedem RFID-gestützten Knoten eine bestimmte geografische Lage zugeordnet ist. Die Information besteht mindestens aus einer Kante, einer Ecke und einer Information über die Ebene.

Das Streckenwegenetz des gesamten Schienensystems ist jeweils als vollständige durch eine Vielzahl von Knoten und Kanten beschriebene Karteneinheit im Computer des Transportroboters gespeichert. Dementsprechend verfügt er über sämtliche Informationen, um jeden beliebigen Punkt im weit verzweigten Streckenwegenetz zu erreichen.

Es handelt sich also annährend um ein Vektorgrafik-System, wie es bei einem Kraftfahrzeug und einem im Kraftfahrzeug eingebauten Navigationssystem gegeben ist, nur dass bei der Erfindung eine Vielzahl von Ebenen berücksichtigt werden müssen, und alle Kanten in Abhängigkeit von der Ebene und der Entfernung vom aktuellen Startpunkt mit bestimmten Kosten belastet sind.

Es ist kein georeferenziertes GPS-System wie beim üblichen Navigationssystem erforderlich, sondern es sind lediglich RFID-Knoten vorhanden, die an entscheidenden Stellen (Verzweigungen, Eingang, Ausgang, Hublift, Ausfahrt vom Lagersystem, Kennzeichnung der Lagerebene) des Schienensystems vorhanden sind, und die lediglich im Nahfeldbereich (NFC) mit dem Transportroboter kommunizieren. Damit wird ein unerwünschtes Übersprechen mehrerer Signale von auseinanderliegenden RFID-Knoten vermieden. Somit können solche RFID-Signale auch störungsfrei in dichtem Abstand angeordnet sein.

Außerdem besteht bei der Erfindung der Vorteil, dass auch virtuelle RFID-Knoten definiert werden können. Dies ist mit dem weiteren Vorteil verbunden, dass ein physikalischer Tag eingespart werden kann, und es ist lediglich in einem physikalischen RFID-Tag ein (weiterer) virtueller RFID-Tag hinterlegt, der zum Beispiel den Abstand des virtuellen Knotens zum realen RFID-Tag, die Ebene und andere fahrweg-spezifische Kriterien bestimmt.

Demnach kann ausgehend von jedem physikalischen RFID-Tag eine Vielzahl von virtuellen RFID-Tags im Umkreis dieses realen RFID-Tags definiert werden.

Damit besteht der Vorteil, dass auch kurz hintereinanderliegend hinter einem RFID-Tag virtuelle RFID-Tags angeordnet werden können, ohne dass es zu einem unerwünschten Übersprechen physikalischer RFID-Tags kommt, wie es bei physikalischen RFID-Tags bei kurz hintereinanderfolgenden Abständen der Fall wäre.

Das im Transportroboter eingebaute Steuerungssystem erkennt demnach den augenblicklichen Anwesenheitspunkt des Transportroboters im weit verzweigten Schienennetz dadurch, dass er die eindeutige Identifizierung des nächstliegenden RFID-Tags aufnimmt und mit seinem weit verzweigten, eingespeicherten Streckennetz vergleicht, und so seinen aktuellen Aufenthaltspunkt bestimmt.

Ausgehend von diesem aktuellen Aufenthaltspunkt wird danach mit der Berechnungssoftware entschieden, wie der Zielpunkt auf günstigste Weise erreicht werden kann.

Wichtig ist, dass auf dem RFID-Tag keine weiteren Daten gespeichert werden müssen, mit Ausnahme der eindeutigen Identifizierungsnummer, weil dies lediglich mit geringem Rechenaufwand verbunden ist.

Hierauf ist die Erfindung jedoch nicht beschränkt, die Erfindung kann auch vorsehen, dass ein RFID-Tag nicht nur seine eindeutige Lage-Information an den Transportroboter abgibt, sondern noch zusätzliche Daten an den Transportroboter übermittelt, wie zum Beispiel Fahrbefehle, Transportbefehle, Kostenangaben und dergleichen mehr.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: schematisierte Draufsicht auf eine Ausführung eines Schienennetzes mit einem darauf verfahrbaren Transportroboter.
Figur 2: eine Stirnansicht eines weit verzweigten Schienennetzes mit der Anordnung eines Lagersystems, das aus vier übereinanderliegenden Lagerebenen besteht, wobei eingangs- und ausgangsseitig dieses Lagers jeweils Hublifte angeordnet sind.
Figur 3: schematisiert die Stirnansicht eines Hubliftes mit dort auf einer Hubplattform angeordneten zwei Transportrobotern und durch Pfeile gekennzeichnete Kantenstrecken, denen gleichzeitig bestimmte virtuelle Kosten zugeordnet sind.

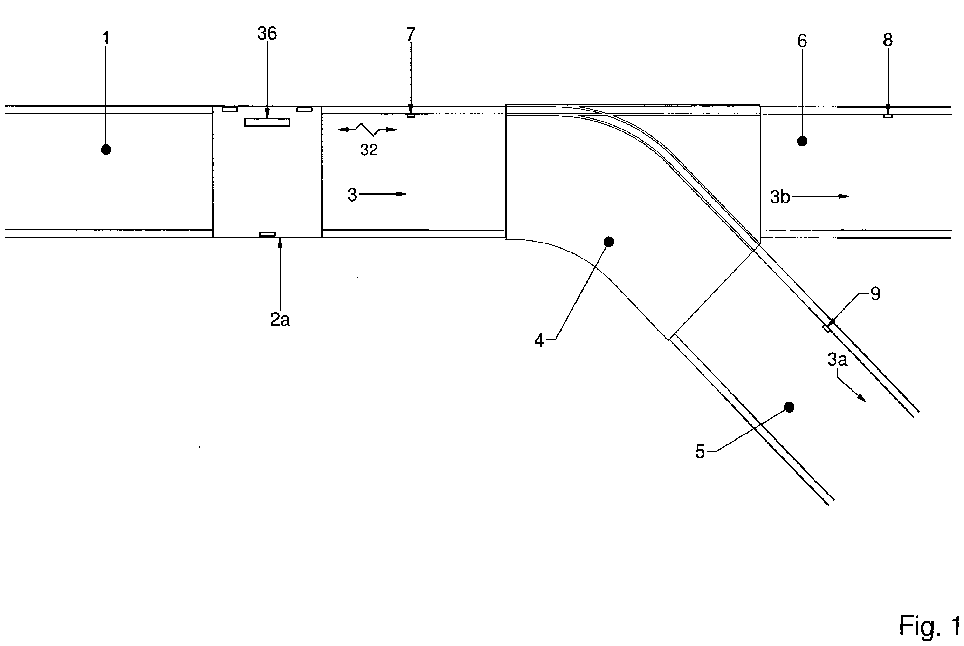

In Figur 1 ist schematisiert die Draufsicht auf ein weit verzweigtes Schienennetz 1 dargestellt, das von einem Transportroboter 2a in Pfeilrichtung 3 befahren wird. Dieser fährt in eine Weiche 4 ein. Am Ausgang der Weiche 4 zweigen zwei Schienenwege 5, 6 ab.

Im Transportroboter 2 ist ein RFID-Lesegerät 36 angeordnet, das in eine NFC-Verbindung 32 zu einem nächst dem augenblicklichen Aufenthaltsort auf dem Schienennetz 1 angeordneten RFID-Knoten 7 aufnimmt.

Der RFID-Knoten 7 sendet über die NFC-Verbindung und ein Funkanforderungssignal seine eindeutige ID. Die ID wird in das Steuerungssystem im Transportroboter eingelesen und mit dem dort abgespeicherten Wegenetz verglichen, sodass aus der ID des RFID-Knotens 7 der augenblickliche Aufenthaltspunkt des Transportroboters 2a auf dem Schienennetz 1 auf 20 cm genau bestimmt werden kann.

Am Ausgang der Weiche 4 sind weitere RFID-Knoten 8 und 9 angeordnet. Beim Annähern an einen dieser Knoten 8, 9 wird wiederum eine NFC-Verbindung zwischen dem Lesegerät 36 im Transportroboter 2a und dem jeweiligen Knoten 8, 9 aufgenommen, und über das Einlesen der ID dieses RFID-Knotens 8, 9 wird der aktuelle, weitere Aufenthaltsort festgestellt.

Der Transportroboter kann dann in Pfeilrichtung 3a oder 3b jeweils den Schienenweg 5 oder 6 befahren.

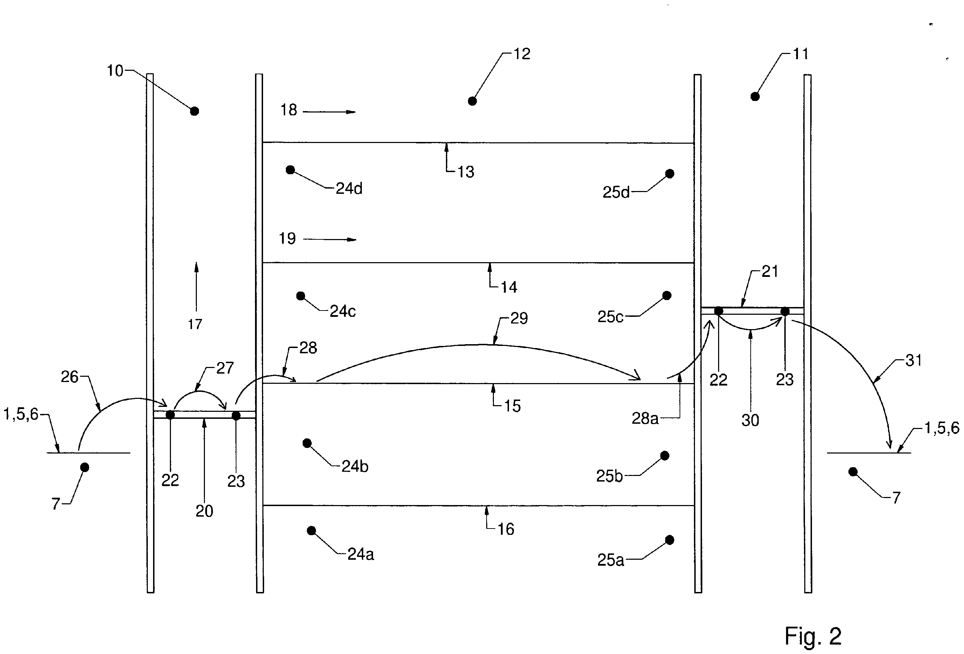

Die Figur 2 zeigt die Vorderansicht des weit verzweigten Schienensystems. Es ist lediglich der Einfachheit halber dargestellt, dass ein weit verzweigtes Lagersystem 12 jeweils von zwei vertikalen Hubliften 10, 11 stirnseitig eingesäumt ist.

Jeder Hublift 10 trägt mindestens eine Hubplattform 20, 21, mit der ein oder mehrere Transportroboter 2a, 2b angehoben oder abgesenkt werden, um so in Pfeilrichtung 17 oder in Gegenrichtung von der unteren Ebene des Schienennetzes 1, 5, 6 in eine obere Lagerebene 13-16 des Lagersystems 12 zu gelangen.

Die Strecken zwischen den RFID-Knoten des gesamten Lagersystems 12 werden durch die Kanten 26-31 definiert. Jede Kante ist eine bestimmte Abstandsstrecke, der auch virtuelle Kosten zugeordnet sind.

Auf den Begriff der virtuellen Kosten wurde in der allgemeinen Beschreibungsanleitung eingegangen.

Beispielsweise erstreckt sich vom RFID-Knoten 7 zu dem auf der Hubplattform 20 angeordneten RFID-Knoten 22 oder 23 eine erste Kante 26 oder wahlweise eine zweite Kante 27.

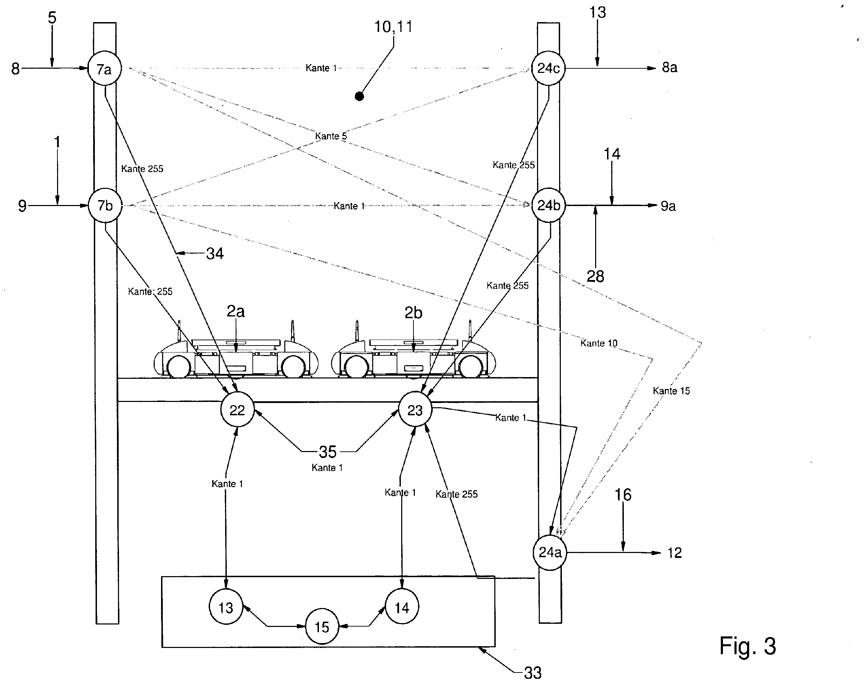

Die Hubplattform 20 trägt im Ausführungsbeispiel zwei RFID-Knoten 22, 23, weil gemäß Figur 3 vorgesehen ist, dass diese Hubplattform 20 auch zwei verschiedene Transportroboter 2a, 2b transportieren kann, und jeder Transportroboter einen individuellen Fahrweg und Fahrauftrag ausführt.

Dementsprechend werden weitere Kanten durch den Abstand der RFID-Knoten 22, 23 zu den lagerebenen-seitigen RFID-Knoten 24a, 24b, 24c und 24d gebildet.

Weitere Kantenstrecken werden in den Lagerebenen 13-16 durch die Kanten 29 gebildet. Weitere Kanten werden durch die Kanten 28a und die Kanten 30 und 31 gebildet, die an der Ausgangsseite des Lagersystems 12 in Richtung auf den ausgangsseitig angeordneten Hublift 11 definiert sind.

Jeder Transportroboter kann demnach unabhängig vom anderen Transportroboter in den Pfeilrichtungen 18 oder 19 jeweils eine Lagerebene 13-16 befahren.

Jeder Abstand zwischen den RFID-Knoten 22-25 ist durch die entsprechenden Kanten definiert, und jeder Kante sind virtuelle Kosten zugeordnet.

Die Figur 3 zeigt als Beispiel die Wegeberechnung von zwei unabhängigen Transportrobotern 2a, 2b, die auf einer Hubplattform 20 des Hubliftes 10, 11 angeordnet sind.

Der Einfachheit halber werden die RFID-Knoten mit einstelligen Zahlen in einem runden Kreis definiert. Es handelt sich also nicht um Bezugszeichen, sondern um Knotennamen.

Wenn nun zum Beispiel der Transportroboter 2a auf der Hubplattform 20 steht und dort mit dem Knoten Nr. 5 (RFID-Knoten 22) eine NFC-Verbindung aufnimmt, wird die Wegstrecke zu einer beliebigen Anzahl von Knoten berechnet, die auf einem Fahrweg liegen.

Kommt beispielsweise der Transportroboter 2a vom Knoten Nr. 1 zum Knoten Nr. 3 über den Schienenweg 5, erhält er beim Knoten Nr. 3 eine erste Wegeinformation in Form der Kante 34, die mit den Kosten 255 verbunden sind.

Diese Kante 34 erstreckt sich somit vom Knoten Nr. 3 bis zum Knoten Nr. 5.

Soll der Transportroboter 2a vom Knoten Nr. 3 über den Knoten Nr. 5 zum Knoten Nr. 6 verfahren werden (Knoten Nr. 6 ist der RFID-Knoten 23), fallen beim Befahren der Kante 35 weitere Kosten an, die jedoch günstig nur mit einem Wert der dezimalen 1 belegt sind.

Soll jedoch der Transportroboter 2a bei in einer auf einer Ebene durchgehend angehobenen Hubplattform 20 direkt zwischen dem Knoten Nr. 3 und dem Knoten Nr. 27 (RFID-Knoten 24c) verkehren, fallen für diese Kante ebenfalls nur Kosten mit dem Wert 1 an.

Es handelt sich deshalb um geringe Kosten, weil ein Ebenenwechsel nicht erforderlich ist.

Demzufolge kann vom Knoten Nr. 1 über den Knoten Nr. 3 und den Knoten Nr. 7 zum Knoten Nr. 10 mit geringstmöglichen Kosten unter direkter Befahrung der dazwischen liegenden Kanten verfahren werden, wodurch geringe Kosten anfallen. Dieser Weg wird dann für den Transportroboter bevorzugt.

Auf diese Weise ist für jeden Transportroboter 2a, 2b durch die Angabe von Pfeilen und dazwischen eingetragenen Kosten angegeben, welche Kosten anfallen, wenn der Transportroboter 2a oder 2b von seinem Knoten Nr. 5 oder Knoten Nr. 6 in Richtung zu entsprechend entfernt liegenden Knoten einen Fahrauftrag erhält.

In Figur 3 ist noch dargestellt, dass im Hublift noch eine Bearbeitungsstation 33 angeordnet sein kann, und wenn die Knoten Nr. 13, 14 oder 15 vom Hublift 20 aus angefahren werden sollen, fallen entsprechend nur niedrige Kosten 1 an.

Soll hingegen der Knoten Nr. 9 angefahren werden, der den Ausgang des Hubliftes 10, 11 charakterisiert, fallen hohe Kosten von 255 an, weil es sich um einen Ebenenwechsel auf die Lagerebene 16 handelt, welche die unterste Ebene des Lagersystems 12 bildet.

### Zeichnungslegende

- 1: Schienennetz
- 2a: Transportroboter
- 2b: Transportroboter
- 3: Pfeilrichtung
- 4: Weiche
- 5: Schienenweg
- 6: Schienenweg
- 7: RFID-Knoten
- 8: RFID-Knoten
- 9: RFID-Knoten
- 10: Hublift
- 11: Hublift
- 12: Lagersystem
- 13: Lagerebene
- 14: Lagerebene
- 15: Lagerebene
- 16: Lagerebene
- 17: Pfeilrichtung
- 18: Pfeilrichtung
- 19: Pfeilrichtung
- 20: Hubplattform
- 21: Hubplattform
- 22: RFID-Knoten
- 23: RFID-Knoten
- 24: RFID-Knoten a, b, c, d
- 25: RFID-Knoten a, b, c, d
- 26: Kante
- 27: Kante
- 28: Kante
- 29: Kante
- 30: Kante
- 31: Kante
- 32: NFC-Verbindung (RFID)
- 33: Bearbeitungsstation
- 34: Kante
- 35: Kante
- 36: RFID-Lesegerät

## Patentansprüche

1. Verfahren zur Steuerung des Fahrweges von schienengebundenen Transportrobotern (2a, 2b) in einem weitverzweigten Schienennetz (1) über mehrere Ebenen, wobei das Schienennetz (1) Weichen (4), Hublifte (10, 11) und Lade- und Abladestationen umfasst, wobei das Schienennetz (1) mit allen schienenintegrierten Einheiten (4; 10, 11; 13-16; 20, 21, 33) mithilfe von Knoten (7-9; 22-25) und Kanten (26-31) im Sinne der Graphentheorie im Steuerungssystem des Transportroboters (2a, 2b) abgebildet ist und den Knoten (7-9; 22-25) jeweils ein RFID-Tag zugeordnet ist, **dadurch gekennzeichnet, dass**
sich der Transportroboter zur Berechnung seines Fahrweges in einem ersten Schritt einem beliebigen, auf der Strecke befindlichen RFID-Tag im Nahfeldbereich nähert und dort die Kommunikation mit dem RFID-Tag aufnimmt,
dass der Transportroboter in einem zweiten Schritt bei der Kommunikation mit dem RFID-Tag über das NFC-Protokoll die Information erhält, an welcher Stelle er sich befindet,
dass der Transportroboter im dritten Schritt über eine funkgestützte Kommunikationsverbindung ein Anwesenheitssignal an eine externe Steuerung sendet und der externen Steuerung mitteilt, wo er sich gerade befindet,
dass der Transportroboter in einem vierten Schritt die externe Steuerung abfragt, ob ein Auftrag für ihn vorliegt,
dass der Transportroboter in einem fünften Schritt über die funkgestützte Kommunikationsverbindung von der externen Steuerung einen Transport- und einen Fahrauftrag mit Angabe des Ziels erhält,
dass der Transportroboter in einem sechsten Schritt die Kanten und Knoten des Zielortes einliest, und eine Berechnung seines Fahrweges durch Vergleich mit dem im Transportroboter eingespeicherten Schienennetz (1) durchführt, und ferner eine Bewertung möglichen Fahrstrecken zur Erreichung des Zielortes ausführt, wobei die verschiedenen vom Transportroboter (2a, 2b) zu befahrenden Strecken mit virtuellen Kosten belegt sind, die ein Maß für die Erreichbarkeit des Zielortes sind, wobei die Bewertung der Erreichbarkeit des Zieles anhand der virtuellen Kosten erfolgt, wobei die virtuellen Kosten umso höher sind, je weiter die vom Transportroboter zu befahrende Strecke von seinem augenblicklichen Aufenthaltsort entfernt ist und je verschiedener die zu überwindenden Ebenen sind, und dass in einem siebten Schritt der Transportroboter die Strecke zum Zielort auswählt, die mit der günstigsten Bewertung hinsichtlich der Erreichbarkeit des Zielortes belegt ist.

2. Verfahren nach Anspruch 1, **dadurch gekennzeichnet, dass** neben den RFID-Tags auch virtuelle RFID-Tags im Steuerungssystem als virtuelle Knoten abgebildet sind, wobei die virtuellen Knoten Knoten ohne zugehörige RFID-Tags sind.

3. Verfahren nach einem der Ansprüche 1 oder 2, **dadurch gekennzeichnet, dass** die schienenintegrierten Einheiten (4; 10, 11; 13-16; 20, 21, 33) als Knoten (7-9; 22-25) definiert sind und dass die Kanten (26-31) die Verbindungen zwischen den Knoten (7-9; 22-25) sind.

4. Verfahren nach einem der Ansprüche 1 bis 3, **dadurch gekennzeichnet, dass** zur Berechnung der virtuellen Kosten ein virtuelles Bewertungssystem verwendet wird, das eine Kosten-Nutzen-Analyse die für die verschiedenen vom Transportroboter zu befahrenden Strecken durchführt.

5. Verfahren nach Anspruch 4, **dadurch gekennzeichnet, dass** je weiter die vom Transportroboter zu befahrende Strecke von seinem augenblicklichen Aufenthaltsort entfernt ist und je verschiedener die zu überwindenden Ebenen sind, desto höher sind die Kosten, diesen entfernten Punkt zu erreichen.

6. Steuerungssystem zur Steuerung des Fahrweges von schienengebundenen Transportrobotern (2a, 2b) in einem weitverzweigten Schienennetz (1 über mehrere Ebenen, wobei das Schienennetz (1) Weichen (4), Hublifte (10, 11) und Lade- und Abladestationen umfasst, wobei das Schienennetz (1) mit allen schienenintegrierten Einheiten (4; 10, 11; 13-16; 20, 21, 33) mithilfe von Knoten (7-9; 22-25) und Kanten (26-31) im Sinne der Graphentheorie im Steuerungssystem des Transportroboters (2a, 2b) abgebildet ist **dadurch gekennzeichnet, dass** an den schienenintegrierten Elementen (4; 10, 11; 13-16; 20, 21, 33) des Schienennetzes (1) jeweils ein RFID-Tag angeordnet ist, der mit einem RFID-Lesegerät (36) im Transportroboter (2a, 2b) über eine NFC-Verbindung (32) kommuniziert und wobei das Steuerungssystem zum austragen des Verfahren nach einem der Ansprüche 1-5 ausgebildet ist.

7. Steuerungssystem nach Anspruch 6, **dadurch gekennzeichnet, dass** jedem RFID-gestützten Knoten eine bestimmte geografische Lage zugeordnet ist, die aus mindestens einer Kante und einer Information über die Ebene des Knotens besteht.

8. Steuerungssystem nach einem der Ansprüche 6 oder 7, **dadurch gekennzeichnet, dass** das Streckenwegenetz des gesamten Schienennetzes (1) als vollständige, durch eine Vielzahl von Knoten und Kanten beschriebene Karteneinheit im Computer des Transportroboters gespeichert ist.

## Claims

1. Method for controlling the travel path of rail-bound transport robots (2a, 2b) in a multi-branched rail network (1) over several planes, wherein the rail network (1) comprises points (4), lifts (10, 11) and loading and unloading stations, wherein the rail network (1) with all rail-integrated units (4; 10, 11; 13-16; 20, 21, 33) is shown with the aid of nodes (7-9; 22-25) and edges (26-31) in the spirit of graph theory in the control system of the transport robot (2a, 2b) and respectively an RFID tag is assigned to the nodes (7-9; 22-25), **characterised in that**
to calculate its travel path in a first step, the transport robot approaches an arbitrary RFID tag located on the route in the near- field region and records the communication with the RFID tag there,
**in that** in a second step, the transport robot during communication with the RFID tag via the NFC protocol receives information about at which point it is located,
**in that** in the third step, the transport robot via a radio-assisted communication connection transmits a presence signal to an external control and announces to the external control where it is currently located,
**in that** in a fourth step, the transport robot interrogates the external control whether a task for it is present,
**in that** in a fifth step, the transport robot via the radio-assisted communication connection receives from the external control a transport task and a travel task with detail of the destination,
**in that** in a sixth step, the transport robot reads-in the edges and nodes of the destination, and carries out a calculation of its travel path by comparison with the rail network (1) stored in the transport robot, and furthermore executes an assessment of possible travel routes to reach the destination, wherein the different routes to be travelled through by the transport robot (2a, 2b) are verified by virtual costs which are a measure of the attainability of the destination, wherein the assessment of attainability of the destination is effected using the virtual costs, wherein the virtual costs are higher, the further the route to be travelled through by the transport robot is away from its current whereabouts and the more different the planes to be overcome are,
and **in that** in a seventh step, the transport robot selects the route to the destination which is verified by the most favourable assessment with regard to the attainability of the destination.

2. Method according to claim 1, **characterised in that** in addition to the RFID tags, virtual RFID tags are also shown in the control system as virtual nodes, wherein the virtual nodes are nodes without associated RFID tags.

3. Method according to one of claims 1 or 2, **characterised in that** the rail-integrated units (4; 10, 11; 13-16; 20, 21, 33) are defined as nodes (7-9; 22-25) and **in that** the edges (26-31) are the connections between the nodes (7-9; 22-25).

4. Method according to one of claims 1 to 3, **characterised in that** to calculate the virtual costs, a virtual assessment system is used which carries out a cost-use analysis for the different routes to be travelled through by the transport robot.

5. Method according to claim 4, **characterised in that** the further the route to be travelled through by the transport robot is away from its current whereabouts and the more different the planes to be overcome are, the higher the costs are to reach this distant point.

6. Control system for controlling the travel path of rail-bound transport robots (2a, 2b) in a multi-branched rail network (1) over several planes, wherein the rail network (1) comprises points (4), lifts (10, 11) and loading and unloading stations, wherein the rail network (1) with all rail-integrated units (4; 10, 11; 13-16; 20, 21, 33) is shown with the aid of nodes (7-9; 22-25) and edges (26-31) in the spirit of graph theory in the control system of the transport robot (2a, 2b), **characterised in that** respectively an RFID tag, which communicates with an RFID reading device (36) in the transport robot (2a, 2b) via an NFC connection (32), is arranged on the rail-integrated elements (4; 10, 11; 13-16; 20, 21, 33) of the rail network (1), and wherein the control system is designed to deal with the method according to one of claims 1-5.

7. Control system according to claim 6, **characterised in that** a certain geographic position, which consists of at least one edge and information about the plane of the node, is assigned to each RFID-assisted node.

8. Control system according to one of claims 6 or 7, **characterised in that** the route path network of the entire rail network (1) is stored in the computer of the transport robot as a complete map unit described by a plurality of nodes and edges.

## Revendications

1. Procédé pour commander l'itinéraire de robots de transport sur rails (2a, 2b) dans un réseau de rails multi-embranchement (1) sur plusieurs niveaux, dans lequel le réseau de rails (1) comprend des aiguillages (4), des élévateurs (10, 11) et des stations de chargement et de déchargement, dans lequel le réseau de rails (1) est représenté avec toutes les unités intégrées dans les rails (4 ; 10, 11 ; 13-16 ; 20, 21, 33) à l'aide de noeuds (7-9 ; 22-25) et d'arrêtés (26-31) au sens de la théorie des graphes dans le système de commande du robot de transport (2a, 2b), et une étiquette RFID est associée à chacun des noeuds (7-9 ; 22-25),
**caractérisé en ce que** lors d'une première étape, le robot de transport, pour le calcul de son itinéraire, approche d'une étiquette RFID quelconque située sur le trajet, dans la zone de champ proche, et établit à cet endroit la communication avec l'étiquette RFID,
**en ce que** lors d'une deuxième étape, le robot de transport reçoit lors de la communication avec l'étiquette RFID par le protocole NFC l'information sur l'endroit où il se trouve,
**en ce que** lors de la troisième étape, le robot de transport envoie un signal de présence à une commande externe par une liaison de communication radio, et signale à la commande externe où il se trouve justement,
**en ce que** lors d'une quatrième étape, le robot de transport interroge la commande externe pour savoir s'il y a un ordre pour lui,
**en ce que** lors d'une cinquième étape, le robot de transport reçoit de la commande externe, par la liaison radio, une instruction de transport et une instruction de circulation avec indication de la cible,
**en ce que** lors d'une sixième étape, le robot de transport lit les arrêtes et les noeuds de la destination et effectue un calcul de son itinéraire par comparaison avec le réseau de rails (1) mis en mémoire dans le robot de transport, et effectue également une évaluation d'itinéraires possibles pour atteindre la destination, dans lequel les différents trajets à effectuer par le robot de transport (2a, 2b) sont munis de coûts virtuels qui donnent une mesure pour l'accessibilité de la destination, dans lequel l'évaluation de l'accessibilité de la cible se fait à l'aide des coûts virtuels, dans lequel les coûts virtuels sont d'autant plus élevés que le trajet à effectuer par le robot de transport est plus éloigné de sa position courante et que les niveaux à franchir sont différents,
et **en ce que** lors d'une septième étape, le robot de transport sélectionne le trajet menant à la destination qui présente l'évaluation la plus avantageuse en ce qui concerne l'accessibilité de la destination.

2. Procédé selon la revendication 1, **caractérisé en ce que**, outre les étiquettes RFID, des étiquettes RFID virtuelles sont également représentées dans le système de commande comme noeuds virtuels, dans lequel les noeuds virtuels sont des noeuds sans étiquettes RFID associées.

3. Procédé selon l'une des revendications 1 ou 2, **caractérisé en ce que** les unités intégrées dans les rails (4 ; 10, 11 ; 13-16 ; 20, 21, 33) sont définies comme des noeuds (7-9 ; 22-25) et **en ce que** les arrêtes (26-31) sont les liaisons entre les noeuds (7-9 ; 22-25).

4. Procédé selon l'une des revendications 1 à 3, **caractérisé en ce que** pour le calcul des coûts virtuels est utilisé un système d'évaluation virtuel qui effectue une analyse coûts-bénéfices pour les différents trajets à effectuer par le robot de transport.

5. Procédé selon la revendication 4, **caractérisé en ce que** plus le trajet à effectuer par le robot de transport est éloigné de sa position courante et plus les niveaux à franchir sont différents, plus les coûts pour atteindre ce point éloigné sont élevés.

6. Système de commande pour commander l'itinéraire de robots de transport sur rails (2a, 2b) dans un réseau de rails multi-embranchement (1) sur plusieurs niveaux, dans lequel le réseau de rails (1) comprend des aiguillages (4), des élévateurs (10, 11) et des stations de chargement et de déchargement, dans lequel le réseau de rails (1) est représenté avec toutes les unités intégrées aux rails (4 ; 10, 11 ; 13-16 ; 20, 21, 33) à l'aide de noeuds (7-9 ; 22-25) et d'arrêtes (26-31) au sens de la théorie des graphes dans le système de commande du robot de transport (2a, 2b), **caractérisé en ce que** sur chacun des éléments intégrés aux rails (4 ; 10, 11 ; 13-16 ; 20, 21, 33) du réseau de rails (1) est disposée une étiquette RFID qui communique avec un lecteur RFID (36) dans le robot de transport (2a, 2b) par une liaison NFC (32), et dans lequel le système de commande est conçu pour réaliser le procédé selon l'une des revendications 1 à 5.

7. Procédé selon la revendication 6, **caractérisé en ce qu'**à chaque noeud à support RFID est associée une position géographique définie qui se compose d'au moins une arrête et d'une information sur le niveau du noeud.

8. Procédé selon l'une des revendications 6 ou 7, **caractérisé en ce que** le réseau de trajets de l'ensemble du réseau de rails (1) est mis en mémoire dans l'ordinateur du robot de transport sous la forme d'une unité de carte complète décrite par une multiplicité de noeuds et d'arrêtes.
